# EUROPÄISCHE PATENTSCHRIFT

(11) **EP 0 762 005 B1**
(45) Veröffentlichungstag und Bekanntmachung des Hinweises auf die Patenterteilung: **01.12.1999**
(21) Anmeldenummer: 96112837.8
(22) Anmeldetag: 09.08.1996
(51) Int. Cl.: F16D 65/16, F16D 65/74

(54) **Bremsaktor mit Hydraulikgetriebe**
Brake actuator with hydraulic transmission
Moteur de frein à transmission hydraulique

(30) Priorität: 12.08.1995 DE 19529791
(43) Veröffentlichungstag der Anmeldung: 12.03.1997
(73) Patentinhaber: Continental Aktiengesellschaft, 30165 Hannover (DE)
(72) Erfinder: Prinzler, Hubertus, 30853 Langenhagen (DE)

(56) Entgegenhaltungen:
- EP-A- 0 286 504
- DE-A- 2 001 258
- DE-A- 2 636 607
- DE-A- 4 229 042
- GB-A- 2 006 901
- GB-A- 2 012 895
- US-A- 4 785 918

## Beschreibung

Die Erfindung betrifft einen Bremsaktor mit Hydraulikgetriebe, bestehend aus einem Elektromotor als Antriebselement, einer Umsetzeinrichtung zum Umsetzen der Rotationsbewegung des Elektromotors in eine Linearbewegung, und einem Hydraulikgetriebe zur übertragung der Linearbewegung der Umsetzeinrichtung auf einen Reibbelag einer Bremse.

Die DE 42 29 042 beschreibt einen solchen Bremsaktor, der mit einem Elektromotor und einer Gewindespindel versehen ist. Dabei wird die Gewindespindel von einem Motor angetrieben, und die Spindelmutter ist mit einem an eine Hydraulikkammer angeschlossenen ersten Hydraulikkolben verbunden. Ein zweiter Hydraulikkolben kann zwecks Durchführung eines Bremsvorgangs auf einen Reibbelag einwirken. Eine Flüssigkeitskammer, in die Bremsflüssigkeit eingefüllt ist, steht mittels einer Durchgangsbohrung mit einem Vorratsbehälter in Verbindung.

Ältere Rechte bestehen aus einem in der Patentanmeldung DE 195 19 308.3 dargestellten Bremsaktor, der gegenüber dem in der DE 42 29 042 beschriebenen Bremsaktor insbesondere durch Funktionsumkehr der Spindel gekennzeichnet ist. Danach steht nicht die Spindel (stange), wie üblich, mit dem Antriebsmotor in direkter Wirkverbindung, sondern es ist vielmehr die Spindelmutter kraftschlüssig an der Motorachse angebracht. Die Gewindespindel <die Spindelstange>, hingegen, steht in kraftschlüssiger Verbindung mit dem Primärkolben eines sich anschließenden Hydraulikgetriebes.

Bremsbeläge (Reibbeläge) unterliegen einem Verschleiß. Während des Betriebs einer Reibungsbremse wird die Reibfläche allmählich abgetragen. Dadurch vergrößert sich der Abstand zwischen Belag und Bremsscheibe. Um zu vermeiden, daß der Abstand zwischen Belag und Bremsscheibe unüberbrückbar groß wird, muß die Bremse, wenn nicht sogar ständig, so doch mindestens von Zeit zu Zeit, nachgestellt werden.
Eine solche Nachstellmöglichkeit ist in der letztgenannten Bremsbetätigungsvorrichtung nicht vorgesehen.

Die Aufgabe der vorliegenden Erfindung besteht darin, eine hydraulische Nachstellung für eine Reibungsbremse zu beschreiben, bei der im ungebremsten Zustand immer ein definierter Abstand der Beläge von der Bremsscheibe gewährleistet ist.

Die Lösung dieser Aufgabe erfolgt bei einem erfindungsgemäßen Bremsaktor durch eine weitere, als Nachstellraum zu bezeichnende Hydraulikkammer, die mit einem gegenüber dem Außenraum beweglichen Ausgleichskolben abgeschlossen, und die mit dem Druckraum über eine im zweiten Hydraulikkolben befindliche öffnung verbunden ist. Die öffnung ist mit einem in Richtung Druckraum öffnenden (ersten) Rückschlagventil versehen.
Beim Zurückfahren der Bremse kann Hydraulikflüssigkeit durch das Rückschlagventil vom Nachstellraum in den Druckraum fließen, soweit Bremsbelagverschleiß kompensiert werden muß. Durch die derartig bewirkte Nachstellung wird verhindert, daß der zwischen Bremsbelag und Bremsscheibe entstehende Abstand unüberbrückbar groß wird. Dabei bewirkt das Rückschlagventil, daß beim Vortrieb des ersten Hydraulikkolbens (Plunger) die Flüssigkeit nicht wieder vom Druckraum in den Nachstellraum zurückfließen kann.

Der erste Hydraulikzylinder ist ein mit Hohlachse versehenes, gehäusefestes Gebilde. Es hat T-förmigen Längsschnitt. Dieser erste Hydraulikzylinder dient gleichzeitig als zweiter Hydraulikkolben. Durch diese Verknüpfung zweier Funktionen wird ein Bauelement eingespart.

Der zweite Hydraulikzylinder ist topfförmig ausgebildet und relativ zum zweiten Hydraulikkolben axial verschieblich.

Da erster und zweiter Hydraulikkolben bzw. erster und zweiter Hydraulikzylinder koaxial übereinander angeordnet sind, ergibt sich eine extrem kurze Baulänge. Dies ist besonders vorteilhaft, da der im Bereich der Radbremsen zur Verfügung stehende Raum beschränkt ist.

Ein weiterer Vorteil der koaxialen Anordnung der beiden Zylinder besteht darin, daß sich mit diesem Aufbau, gewissermaßen zwanglos, eine große übersetzung ergibt.

Zur einfacheren Montage wird im Falle eines Bremsbelagwechsels der erste Hydraulikkolben (Plunger) so weit zurückgefahren, daß er die Mündung eines zwischen Druckraum und Nachstellraum befindlichen Rückstellkanals, der gegenüber dem Nachstellraum durch ein weiteres Rückschlagventil abgesichert ist, freigibt.

Man kann auf den Rückstellkanal (die Rückstellbohrung) verzichten, wenn man das erste Rückschlagventil in der Weise ausführt, daß es in einem drucklosen Zustand leicht öffnet und bei einem gewissen überdruck sofort schließt. D. h., wenn der Plunger vom Motor getrieben nach vorne fährt und einen Druckaufbau vornimmt, schließt dieses Rückschlagventil sofort. Wenn man beim Bremsbelagwechsel den Belagträger per Hand oder per Mechanismus langsam, quasistatisch zurückdrückt, dann bleibt das Rückschlagventil offen. D. h., wenn ein gewisser Differenzdruck oder eine gewisse Strömungsgeschwindigkeit in diesem Kanal überschritten wird, dann schließt sich dieses Rückschlagventil schlagartig. Wenn hingegen dieser Differenzdruck nicht überschritten wird, bleibt es offen. D. h.: Durch langsames, quasistatisches Zurückdrücken der Hydrauliktasse oder der Drucktasse ist es so möglich, das Fluid aus dem Druckraum wieder in den Ausgleichsraum zu befördern. Auf diese Weise kann die Funktion des Kanals in das vordere Rückschlagventil integriert werden, da im quasidrucklosen Zustand oder bei geringer Druckdifferenz zwischen Druckraum und Ausgleichsraum dieses Ventil, z. B. durch eine schwache Feder, teilgeöffnet bleibt und beim Druckaufbau sofort schließt.

Der erste Hydraulikkolben (Plunger) ist gegenüber der zylindrischen Innenfläche des ersten Hydraulikzylinders, der zweite Hydraulikkolben gegenüber der Innenfläche des zweiten Hydraulikzylinders, und der Ausgleichskolben ist sowohl gegenüber der Außenfläche des ersten Hydraulikzylinders als auch gegenüber der Innenfläche des zweiten Hydraulikzylinders mit Hilfe von Kolbenringen zuverlässig abgedichtet.

Die erfindungsgemäße Nachstellung erfolgt automatisch mit jedem Bremsvorgang. Die für die Nachstellung erforderlichen Bauelemente sind vollständig in den hydraulischen Radbremsaktor integriert, wodurch sich ein geschlossenes, lokal begrenztes hydraulisches System ergibt. Durch den als "Vorratsbehälter" wirkenden Nachstellraum können bezüglich der Hydraulikflüssigkeit verlängerte Wartungsintervalle angesetzt werden.

Im folgenden wird die Erfindung anhand eines Ausführungsbeispiels beschrieben.

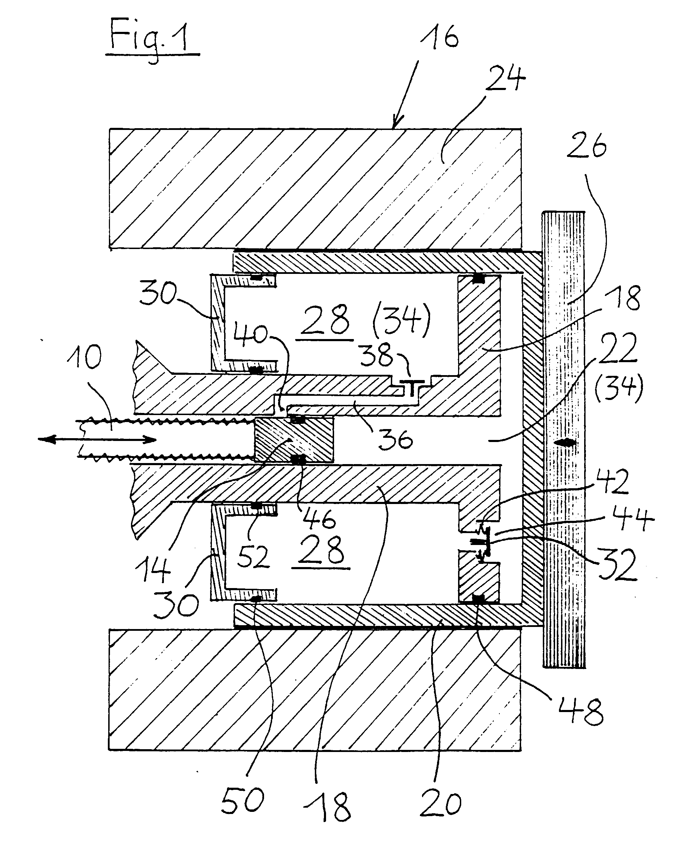

Die Figur 1 zeigt einen Längsschnitt durch eine erfindungsgemäße Hydraulikkomponente eines Bremsaktors.
Die Figur 2 zeigt einen Längsschnitt durch einen Bremsaktor mit Hydraulikgetriebe entsprechend dem Stand der Technik.

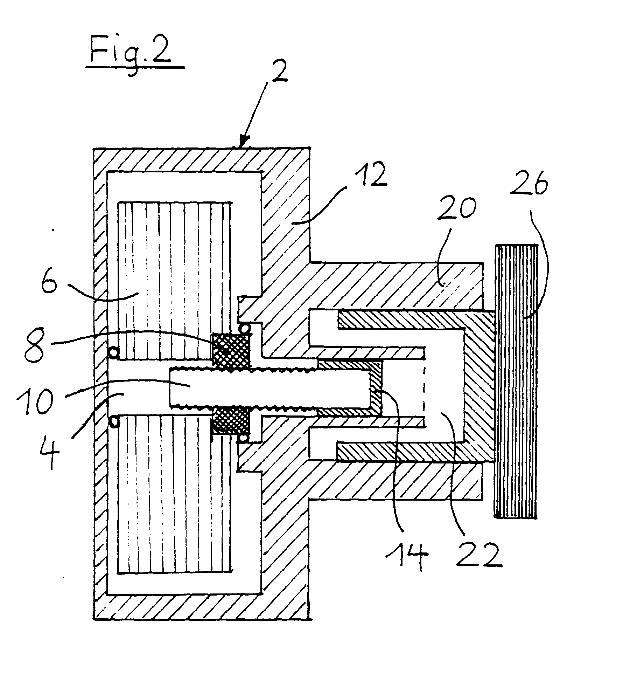

Ein Bremsaktor mit einer gattungsgemäßen Hydraulikkomponente besteht im wesentlichen aus einem Elektromotor 2, vorzugsweise mit Hohlwelle 4, und einer sich daran anschließenden Gewindespindel 8, 10, die sich aus einer Spindelmutter 8 und einer Spindelstange 10 zusammensetzt, und wobei die Spindelmutter 8 mit dem Läufer 6 des Motors 2 in Wirkverbindung steht, z. B., indem die Spindelmutter 8 direkt koaxial drehfest an dem Läufer 6 des Motors 2 angeflanscht ist, wie es die Ausführung nach Fig. 2 zeigt.

Die mit dem Läufer 6 des Motors 2 drehbare Spindelmutter 8 ist zwecks Vortrieb der Spindelstange 10 auf diese aufschraubbar. Die Spindelstange 10 ist längsverschieblich, aber gegenüber dem Gehäuse 12 des Bremsaktors verdrehgesichert angebracht und entweder kraftschlüssig mit einem ersten Hydraulikkolben (Plunger) 14 verbunden oder es besteht sogar eine funktionelle Einheit von Spindelstange 10 und erstem Hydraulikkolben 14.

Der erste Hydraulikkolben 14 ist Teil eines Hydraulikgetriebes 16. Das Hydraulikgetriebe 16 umfaßt weiter: einen (ersten) Hydraulikzylinder 18, der im vorliegenden Ausführungsbeispiel gleichzeitig einen zweiten Hydraulikkolben 18 darstellt. Dieser erste Hydraulikzylinder (= zweiter Hydraulikkolben) 18 ist gehäusefest angeordnet. Die von einem zweiten, längsverschieblichen Hydaulikzylinder 20 eingeschlossene Hydraulikkammer (Druckraum) 22 wird einerseits von dem ersten Hydaulikkolben (Plunger) 14 und andererseits von dem zweiten Hydraulikkolben 18 (der gleichzeitig erster Hydraulikzylinder 18 ist) begrenzt.

Die Stirnfläche des zweiten, längsverschieblichen Hydraulikzylinders 20 ist geschlossen. Auf seiner Zylinderfläche ist ein Bremssattel 24, auf seiner Stirnfläche ist ein Bremsbelag 26 befestigt.

Im Unterschied zu herkömmlichen Bremsaktoren mit Hydraulikgetriebe, bei denen jeweils zwei Hydraulikzylinder und zwei Hydraulikkolben erforderlich sind, ist beim erfindungsgemäßen Bremsaktor der erste Hydraulikzylinder 18 mit dem zweiten Hydraulikkolben 18 identisch, so daß darüber hinaus nur noch ein (erster) Hydraulikkolben (Plunger) 14 und ein (zweiter) topfförmiger Hydraulikzylinder 20 erforderlich sind.

Der erste Hydraulikkolben 14 bewegt sich innerhalb des kombinierten ersten Hydraulikzylinders/zweiten Hydraulikkolbens 18, der zweite, topfförmig über den zweiten Hydraulikkolben 18 gestülpte Hydraulikzylinder 20 bewegt sich koaxial zum ersten Hydraulikkolben 14. Wegen des koaxialen Aufbaus ergibt sich zwangsläufig, daß der Durchmesser des zweiten Hydraulikkolbens 18 (bzw. des zweiten Hydraulikzylinders 20) größer ist als der Durchmesser des ersten Hydraulikkolbens (Plungers) 14 (bzw. des ersten Hydraulikzylinders 18), woraus eine Kraftübersetzung resultiert.

Der mit der Hydraulikkomponente gegebene erfindungsgemäße Nachstellmechanismus wird innerhalb des topfförmig ausgebildeten zweiten Hydraulikzylinders 20 von einer weiteren Hydraulikkammer, dem sogenannten Nachstellraum 28, gebildet. Dieser Nachstellraum 28 ist einerseits durch die Rückseite des zweiten Hydraulikkolbens 18 und andererseits gegenüber dem Außenraum durch einen Ausgleichskolben 30 begrenzt.

Der Nachstellraum 28 steht mit dem Druckraum 22 über eine in dem zweiten Hydraulikkolben 18 befindliche und mit einem (ersten) Rückschlagventil 32 versehene öffnung 44 in Verbindung. Dieses Rückschlagventil 32 öffnet sich, sobald der erste Hydraulikkolben 14 zurückgefahren wird, sofern der zweite Hydraulikzylinder 20 nicht im gleichen Maße nachgeführt wird. In diesem Fall strömt Hydraulikflüssigkeit (Fluid) 34 vom Nachstellraum 28 in den Druckraum 22. Gleichzeitig taucht der Ausgleichskolben 30 dem Volumenverlust entsprechend in den Nachstellraum 28 hinein.

Darüber hinaus befindet sich in der Wandung des ersten Hydraulikzylinders 18 zwischen Druckraum 22 und Nachstellraum 28 ein Rückstellkanal 36 mit einem (weiteren) Rückschlagventil 38 mit Durchlaß in Richtung Nachstellraum 28. In normaler Ruhestellung und während des Betriebs der Bremse ist die zum Druckraum 22 führende Mündung 40 des Rückstellkanals 36 durch den mit der Spindelstange 10 vorgefahrenen ersten Hydraulikkolben (Plunger) 14 verschlossen.

Die Wirkungsweise der Hydraulikkomponente mit dem erfindungsgemäßen Nachstellmechanismus funktioniert folgendermaßen:

In der Ruhestellung herrschen im Druckraum 22 und im Nachstellraum 28 die gleichen Fluiddrücke (=Umgebungsdruck).

Beim Einleiten eines Bremsvorgangs wird der Plungerkolben 14 durch den Motor 2 mittels der Gewindespindel 8, 10 vorgefahren und im Druckraum 22 wird der entsprechende Bremsdruck aufgebaut. Das zwischen Druckraum 22 und Nachstellraum 28 befindliche Rückschlagventil 32 verhindert einen Druckausgleich zwischen diesen beiden Bereichen. Entsprechend dem Druck im Druckraum 22 und der Gegenkraft zwischen Bremsbelag 26 und Bremsscheibe wird der (zweite) Hydraulikzylinder 20 mit Bremsbelag 26 um einen bestimmten Weg vorgeschoben. Wenn die Bremse gelöst wird, bewegt sich der Hydraulikzylinder 20 aufgrund von Elastizitäten und Scheibenschlag zurück.

Ist während des Bremsvorganges ein Belagverschleiß eingetreten, wird ein Druckgleichgewicht zwischen Druckraum 22 und Nachstellraum 28 bereits erreicht, bevor der Plunger 14 in seine Nullage zurückgefahren ist. In diesem Fall tritt bei einem weiteren Zurückziehen des Plungers 14 zwischen Nachstellraum 28 und Druckraum 22 ein Druckgefälle auf, so daß das Fluid 34 durch das Rückschlagventil 32 von dem Nachstellraum 28 in den Druckraum 22 überströmen kann. Da es zwischen Druckraum 22 und Nachstellraum 28 durch das Nachstellen Volumenunterschiede gibt, ist im Nachstellraum 28 ein Ausgleichskolben 30 angeordnet, der den Volumenunterschied ausgleichen kann. Bei der nächsten Bremsbetätigung steht im Druckraum 22 entsprechend der Nachstellung mehr Fluid 34 zur Verfügung und der Hydraulikzylinder 20 hat eine andere Ausgangslage. Die Nullage des Plungers 14 ist jedoch die gleiche geblieben.

Im Falle eines Wechsels des Bremsbelags 26 muß das Fluid 34 vom Druckraum 22 in den Nachstellraum 28 gelangen. Dazu wird der Plunger 14 mittels der Spindelstange 10 soweit zurückgefahren, bis er den Rückstellkanal 36 freigibt. Durch Zurückdrücken des Hydraulikzylinders 20 gelangt das Fluid 34 aus dem Druckraum 22 über den Rückstellkanal 36 in den Nachstellraum 28.

Statt mit einem Rückstellkanal 36 kann - zum Zwecke eines erleichterten Belagwechsels - das erste Rückschlagventil 32 mit einer schwachen Feder 42 ausgestattet sein. Mittels dieser Feder 42 bleibt das Rückschlagventil 32 bei quasistatischen Strömungsverhältnissen bis zu einem gewissen überdruck geöffnet.
Wird aber ein vorbestimmter Differrenzdruck oder eine gewisse Strömungsgeschwindigkeit überschritten, so schließt sich das Rückschlagventil 32 schlagartig.

Es ist auch eine Ausführung denkbar, wo der Plunger 14 nicht direkt an der Radbremse sitzt und die Nachstellung allein in die Radbremse integriert ist.

### Bezugszeichenliste

- 2: Elektromotor
- 4: Hohlwelle
- 6: Läufer
- 8, 10: Gewindespindel
- 8: Spindelmutter
- 10: Spindelstange
- 12: Gehäuse des Bremsaktors
- 14: erster Hydraulikkolben <Plunger)
- 16: Hydraulikgetriebe
- 18: erster Hydraulikzylinder (= zweiter Hydraulikkolben)
- 20: zweiter Hydraulikzylinder
- 22: Hydraulikkammer (Druckraum)
- 24: Bremssattel
- 26: Bremsbelag
- 28: weitere Hydraulikkammer (Nachstellraum)
- 30: Ausgleichskolben
- 32: (erstes) Rückschlagventil
- 34: Hydraulikflüssigkeit (Fluid)
- 36: Rückstellkanal
- 38: (weiteres) Rückschlagventil
- 40: Mündung
- 42: Feder
- 44: öffnung
- 46, 48, 50, 52: Kolbenringe

## Patentansprüche

1. Bremsaktor zum Aufbringen einer Bremskraft auf eine Bremsscheibe eines Fahrzeugs, mittels eines Bremsbelags (26),
bestehend aus:
- einem Elektromotor (2) als Kraftquelle,
- einem Hydraulikgetriebe (16) mit einer Hydraulikkammer (Druckraum) (22),
mit einem ersten (14) und einem zweiten Hydraulikkolben (18)
und mit einem ersten (18) und einem zweiten Hydraulikzylinder (20)
- einer zwischen Elektromotor (2) und Hydraulikgetriebe (16) befindlichen Gewindespindel (8, 10) zur Umsetzung der Rotationsbewegung des Motors (2) in eine Translationsbewegung des Hydraulikgetriebes (16) mit dem daran befestigten bremsbelag (26)
- und einer weiteren Hydraulikkammer (Nachstellraum) (28),
**dadurch gekennzeichnet,** daß
die weitere Hydraulikkammer (Nachstellraum) (28) mit einem gegenüber dem Außenraum beweglichen Ausgleichskolben (30) abgeschlossen und mit dem Druckraum (22) über eine im zweiten Hydraulikkolben (18) befindliche öffnung (44) verbunden ist, wobei die öffnung (44) mit einem in Richtung Druckraum (22) öffnenden Rückschlagventil (32) versehen ist.

2. Bremsaktor nach Anspruch 1,
**dadurch gekennzeichnet,**
daß der erste Hydraulikzylinder (18) ein T-förmiges, mit Hohlachse versehenes, gehäusefestes Gebilde ist, welches gleichzeitig als zweiter Hydraulikkolben (18) dient, und
daß der zweite Hydraulikzylinder (20) topfförmig ausgebildet ist und relativ zum zweiten Hydraulikkolben (18) axial verschieblich ist.

3. Bremsaktor nach Anspruch 1 oder 2,
**gekennzeichnet durch**
einen zwischen Druckraum (22) und Nachstellraum (28) befindlichen Rückstellkanal (36),
wobei der Druckraum (22) gegenüber dem Nachstellraum (28) durch ein (weiteres) Rückschlagventil (38) abgesperrt ist,
und wobei durch Zurückfahren des ersten Hydraulikkolbens (Plunger) (14) eine Mündung (40) des Rückstellkanals (36) zum Druckraum (22) freigegeben wird.

4. Bremsaktor nach Anspruch 1 oder 2,
**dadurch gekennzeichnet**,
daß das Rückschlagventil (32) im drucklosen Zustand z. B. mittels einer Feder (42) leicht geöffnet ist und bei einem definiert vorgegebenen überdruck sofort schließt.

5. Bremsaktor nach einem der Ansprüche 1 - 4,
**dadurch gekennzeichnet**,
daß der erste Hydraulikkolben (Plunger) (14) gegenüber der zylindrischen Innenfläche des ersten Hydraulikzylinders (18),
der zweite Hydraulikkolben (18) gegenüber der Innenfläche des zweiten Hydraulikzylinders (20) und der Ausgleichskolben (30) sowohl gegenüber der Außenfläche des ersten Hydraulikzylinders (18) als auch gegenüber der Innenfläche des zweiten Hydraulikzylinders (20) mit Hilfe von Kolbenringen (46, 48, 50, 52) abgedichtet ist.

## Claims

1. Brake actuator for applying a braking force to a brake disc of a vehicle, by means of a brake lining (26), comprising:
- an electromotor (2) as the source of power supply,
- an hydraulic transmission (16) provided with a hydraulic chamber (pressure chamber) (22), provided with a first hydraulic piston (14) and a second hydraulic piston (18) and provided with a first hydraulic cylinder (18) and a second hydraulic cylinder (20),
- a threaded spindle (8, 10), which is situated between electromotor (2) and hydraulic transmission (16), for converting the rotational movement of the motor (2) into a translational movement of the hydraulic transmission (16) with the brake lining (26) mounted thereon,
- and an additional hydraulic chamber (adjustment chamber) (28),
characterised in that the additional hydraulic chamber (adjustment chamber) (28) is terminated with a compensating piston (30), which is displaceable relative to the external chamber, and said additional hydraulic chamber is connected to the pressure chamber (22) via an opening (44), which is situated in the second hydraulic piston (18), the opening (44) being provided with a non-return valve (32), which opens in the direction of pressure chamber (22).

2. Brake actuator according to claim 1, characterised in that the first hydraulic cylinder (18) is a T-shaped structure, which is provided with a hollow shaft and is integral with the housing, said structure serving simultaneously as a second hydraulic piston (18), and in that the second hydraulic cylinder (20) has a cup-shaped configuration and is axially displaceable relative to the second hydraulic piston (18).

3. Brake actuator according to claim 1 or 2, characterised by a return duct (36), which is situated between pressure chamber (22) and adjustment chamber (28), the pressure chamber (22) being shut-off from the adjustment chamber (28) by a (an additional) non-return valve (38), and an aperture (40) in the return duct (36) being exposed to the pressure chamber (22) by retracting the first hydraulic piston (plunger) (14).

4. Brake actuator according to claim 1 or 2, characterised in that the non-return valve (32) in the pressureless state, for example, is slightly opened by means of a spring (42) and closes immediately there is a specifically prescribed excess pressure.

5. Brake actuator according to one of claims 1 - 4, characterised in that the first hydraulic piston (plunger) (14) is sealed from the cylindrical internal surface of the first hydraulic cylinder (18), the second hydraulic piston (18) is sealed from the internal surface of the second hydraulic cylinder (20), and the compensating piston (30) is sealed both from the external surface of the first hydraulic cylinder (18) and from the internal surface of the second hydraulic cylinder (20) by means of piston rings (46, 48, 50, 52).

## Revendications

1. Moteur de frein pour l'application d'une force de freinage, au moyen d'une garniture de frein (26), sur un disque de frein d'un véhicule, se composant :
- d'un moteur électrique (2) utilisé comme source d'énergie,
- d'une transmission hydraulique (16) comprenant une chambre hydraulique (chambre de réserve) (22), un premier piston hydraulique (14) et un second piston hydraulique (18), un premier cylindre hydraulique (18) et un second cylindre hydraulique (20),
- d'une broche filetée (8, 10) placée entre le moteur électrique (2) et la transmission hydraulique (16) pour transformer le mouvement de rotation du moteur (2) en un mouvement de translation de la transmission hydraulique (16) comportant la garniture de frein (26) fixée sur la transmission hydraulique et une autre chambre hydraulique (chambre de réglage) (28),
caractérisé
- en ce que l'autre chambre hydraulique (chambre de réglage) (28) est obturée par un piston d'équilibrage (30) mobile par rapport à l'espace extérieur et en ce qu'elle est reliée à la chambre de réserve (22) par une ouverture (44) placée dans le second piston hydraulique (18), où l'ouverture (44) est dotée d'un clapet antiretour (32) s'ouvrant en direction de la chambre de réserve (22).

2. Moteur de frein selon la revendication 1, caractérisé en ce que le premier cylindre hydraulique (18) a une forme en T, qu'il est fixé au carter et qu'il est doté d'un axe creux, lequel premier cylindre hydraulique sert en même temps de second piston hydraulique (18) et en ce que le second cylindre hydraulique (20) est configuré en forme de coupelle et en ce qu'il est mobile axialement par rapport au second piston hydraulique (18).

3. Moteur de frein selon la revendication 1 ou 2, caractérisé par un canal de retour (36) placé entre la chambre de réserve (22) et la chambre de réglage (28), où la chambre de réserve (22) est obturée par un (autre) clapet antiretour (38) par rapport à la chambre de réglage (28) et où un orifice (40) du canal de retour (36) donne accès à la chambre de réserve (22) lors du mouvement de retour du premier piston hydraulique (piston plongeur) (14).

4. Moteur de frein selon la revendication 1 ou 2, caractérisé en ce que le clapet antiretour (32), lorsqu'il n'est pas sous pression, est facilement ouvert par exemple au moyen d'un ressort (42) et en ce qu'il se ferme immédiatement dès qu'une surpression prédéterminée est appliquée.

5. Moteur de frein selon l'une quelconque des revendications 1 à 4, caractérisé
- en ce que le premier piston hydraulique (piston plongeur) (14) est rendu étanche par rapport à la surface intérieure cylindrique du premier cylindre hydraulique (18),
- en ce que le second piston hydraulique (18) est rendu étanche par rapport à la surface intérieure du second cylindre hydraulique (20) et
- en ce que le piston d'équilibrage (30) est rendu étanche aussi bien par rapport à la surface extérieure du premier cylindre hydraulique (18) que par rapport à la surface intérieure du second cylindre hydraulique (20), à l'aide de segments de piston (46, 48, 50, 52).
